# EUROPÄISCHE PATENTSCHRIFT

(11) **EP 3 988 989 B1**
(45) Veröffentlichungstag und Bekanntmachung des Hinweises auf die Patenterteilung: **07.06.2023**
(21) Anmeldenummer: 21202387.3
(22) Anmeldetag: 13.10.2021
(51) Int. Cl.: G02B 21/36, G02B 27/00

(54) **VERFAHREN UND MIKROSKOP MIT EINER EINRICHTUNG ZUM ERFASSEN VON VERLAGERUNGEN EINER PROBE GEGENÜBER EINEM OBJEKTIV**
METHOD AND MICROSCOPE WITH A DEVICE FOR DETECTING DISPLACEMENTS OF A SAMPLE RELATIVE TO A LENS
PROCÉDÉ ET MICROSCOPE DOTÉ D'UN DISPOSITIF DE DÉTECTION DES DÉPLACEMENTS D'UN ÉCHANTILLON PAR RAPPORT À UNE LENTILLE

(30) Priorität: 14.10.2020 DE 102020127071
(43) Veröffentlichungstag der Anmeldung: 27.04.2022
(73) Patentinhaber: Abberior Instruments GmbH, 37077 Göttingen (DE)
(72) Erfinder: Schmidt, Roman, 37077 Göttingen (DE)
(74) Vertreter: REHBERG HÜPPE + PARTNER

(56) Entgegenhaltungen:
- WO-A1-2018/102147
- WO-A1-2019/091570
- WO-A1-2020/201430

## Beschreibung

### TECHNISCHES GEBIET DER ERFINDUNG

Die Erfindung bezieht sich auf ein Verfahren zum Erfassen von Verlagerungen einer Probe gegenüber einem Objektiv. Genauer bezieht sich die Erfindung auf ein Verfahren mit den Merkmalen des Oberbegriffs des unabhängigen Patentanspruchs 1.

Weiterhin bezieht sich die Erfindung auf ein Mikroskop mit einem Objektiv und mit einer Einrichtung zum Erfassen von Verlagerungen einer Probe gegenüber dem Objektiv. Genauer bezieht sich die Erfindung auf ein Mikroskop mit den Merkmalen des Oberbegriffs des unabhängigen Patentanspruchs 15.

Insbesondere in der hochauflösenden Mikroskopie, in der räumliche Auflösungen jenseits der Beugungsgrenze erreicht werden, wirken sich Verlagerungen einer untersuchten Probe gegenüber einem Objektiv des jeweiligen Mikroskops auch dann signifikant aus, wenn diese Verlagerungen nicht über den Nanometerbereich hinaus gehen. Eine zwischen zwei Zeitpunkten erfolgte Verlagerung der Probe gegenüber dem Objektiv verschiebt die zu diesen beiden Zeitpunkten bestimmten Positionen von Objekten in der Probe relativ zueinander. Wenn auftretende Verlagerungen der Probe gegenüber dem Objektiv nicht erfasst werden, können sie nicht kompensiert werden, und die effektive räumliche Auflösung bei der mikroskopischen Abbildung einer interessierenden Struktur wird durch die Größe dieser Verlagerungen bestimmt.

Da Verlagerungen einer Probe gegenüber dem Objektiv eines Mikroskops insbesondere über längere Messzeiten hinweg niemals ganz zu vermeiden sind und auch das Begrenzen auftretender Verlagerungen auf kleine Werte erheblichen technologischen Aufwand verursacht, besteht ein Interesse daran, auftretende Verlagerungen zu erfassen, um sie zu berücksichtigen, d. h. insbesondere kompensieren zu können.

### STAND DER TECHNIK

Aus der WO 2020/201430 A1 ist es zum Erfassen von Verlagerungen einer Probe gegenüber einem Objektiv bekannt, Licht von mindestens einem mit der Probe verbundenen Referenzobjekt zu aufeinanderfolgenden Zeitpunkten mit dem Objektiv in Bilder in einer Bildebene abzubilden. Die Bilder in der Bildebene werden mit einer Kamera als Bildsensor aufgezeichnet und mit Referenzbildern verglichen. Dabei werden in einer zu der Bildebene Fourier-konjugierten Ebene vor der Kamera niedrige Ortsfrequenzen aus den Bildern ausgeblendet, indem Anteile des Lichts, die aus einem Zentralbereich einer Pupille des Objektivs stammen, in der zu der Bildebene Fourier-konjugierten Ebene ausgeblendet werden. Die Referenzobjekte sollen Kanten aufweisen, über denen die Intensität des von den Referenzobjekten ausgehenden Lichts um mindestens 90 % abfällt und deren Breite parallel zu der Bildebene kleiner als die Wellenlänge des Lichts ist. Bei den Referenzobjekten kann es sich um punktförmige Markierungen oder Beads mit einem Durchmesser unterhalb der Wellenlänge des Lichts handeln, es sollen aber auch geeignete Strukturen der eigentlichen Probe sein können. Aus Verschiebungen von Abbildern der Referenzobjekte zwischen den Bildern wird auf eine laterale, d.h. orthogonal zu einer optischen Achse des Objektivs orientierte Verlagerung der Probe gegenüber dem Objektiv geschlossen. Auf axiale, d.h. längs der optischen Achse orientierte Verlagerungen der Probe gegenüber dem Objektiv wird hingegen aus Verformungen der Abbilder der Referenzobjekte und insbesondere aus Ähnlichkeiten von Abbildern der Referenzobjekte in den Bildern mit Abbildern der Referenzobjekte in den Referenzbildern geschlossen. Die WO 2020/201430 A1 offenbart ein Verfahren mit den Merkmalen des Oberbegriffs des unabhängigen Patentanspruchs 1 und ein Mikroskop mit den Merkmalen des Oberbegriffs des unabhängigen Patentanspruchs 15. Wie die Abbilder der Referenzobjekte, insbesondere von geeigneten Strukturen der Probe selbst, in den Bildern aufgefunden oder gar automatisch selektiert werden können, geht aus der WO 2020/201430 A1 jedoch nicht hervor.

Aus den "Supplementary Materials" zu F. Balzarotti et al., "Nanometer resolution imaging and tracking of fluorescent molecules with minimal photon fluxes", Sience, Vol. 355, Issue 6325, Seiten 606-612, 2017, ist es bekannt, die axiale Position einer Probe gegenüber einem Objektiv durch die Verlagerung des Abbilds eines unter einem Winkel eingestrahlten, an einer Deckglasgrenzfläche total reflektierten Referenzstrahls in einem mit einer Kamera aufgenommenen Bild des Deckglases zu erfassen. Eine laterale Probenposition gegenüber dem Objektiv wird durch Abbilden eines Dunkelfeldbilds von streuenden Nanorods in der Probe auf eine weitere Kamera erfasst, wobei eine zweidimensionale Gauß-Funktion an die Abbilder der Nanorods angefittet wird, und das Zentrum der jeweiligen Funktion als Maß für die laterale Position des jeweiligen Nanorods verwendet wird. Auch in diesem Dokument wird nicht beschrieben, wie die Abbilder der Nanorods in den Dunkelfeldbildern aufgefunden oder gar automatisch selektiert werden können.

K. C. Gwosch et al., "MINFLUX nanoscopy delivers multicolor nanometer 3D-resolution in (living) cells", bioRxiv, doi: http://dx.doi.org/10.1101/734251, 2019, offenbaren unter "Materials and Methods" ein aktives Stabilisierungssystem zur Lagestabilisierung einer Probe gegenüber einem Objektiv. Zur lateralen Stabilisierung werden streuende Gold-Nanorods auf eine Kamera abgebildet. Die axiale Position wird durch Beleuchtung der Probe mit einem an der Probe total reflektierten Infrarotlaserstrahl erfasst. Auch hier gibt es keinen Hinweis darauf, wie die Abbilder der einzelnen Gold-Nanorods automatisch in den Bildern der Kamera aufgefunden oder gar automatisch selektiert werden können.

Aus der DE 10 2018 107 356 A1 sind ein Verfahren zum Betreiben eines Mikroskops und eine Steuereinheit für ein Mikroskop zur Realisierung eines Autofokus mit winkelvariabler Beleuchtung bekannt. Bei einer Vielzahl von winkelvariablen Beleuchtungsgeometrien wird mindestens ein Bild erfasst. Basierend auf Steuerdaten, die indikativ für a-prio-Wissen sind, wird eine Trennung einer Abbildung eines Messobjekts von Störstrukturen in dem mindestens einen Bild durchgeführt. Nach der Trennung werden gegenüber einer Veränderung der winkelvariablen Beleuchtungsgeometrie veränderliche Anteile in dem mindestens einen Bild als Objektverschiebung des Messobjekts erkannt. Basierend auf der Objektverschiebung wird eine Defokusposition des Messobjekts bestimmt und dann durch Einstellen einer Z-Position einer Probenbühne des Mikroskops ausgeglichen. Bei den Störstrukturen kann es sich beispielsweise um Lichtreflexe, Abschattungen, Effekte aufgrund von Verunreinigungen, z. B. im Bereich der Probenbühne oder aber auch an statischen Bereichen einer Abbildungsoptik des Mikroskops, und Sensorrauschen des Detektors handeln. Zur Identifizierung der Störstrukturen kann das Messobjekt in z-Richtung bewegt werden. Ortsfeste Störstrukturen, die nicht an der Probenbühne angebracht sind, wären dann ortsfest und könnten durch Differenzbildung erkannt werden. Im Allgemeinen wird also auf Referenz-Messungen zurückgegriffen werden, bei denen ein Bild ohne Messobjekt oder mit variablem Messobjekt erfasst wird, etwa in einer Kalibrationsphase vor der eigentlichen Messung. Dann werden in einem entsprechenden Referenzbild die Störstrukturen erkannt, die durch die Abbildungsoptik des optischen Systems verursacht werden. In einer anderen Implementierung wird der Kontrast in Zusammenhang mit einem Signal-zu-Rausch-Verhältnis berücksichtigt. Dazu wird eine paarweise Korrelation zwischen Bildern einer Vielzahl von Bildern durchgeführt und jeweils ein Korrelationsmaximum in der Korrelation erkannt. Dann wird gefordert, dass das Korrelationsmaximum einen bestimmten Schwellenwert nicht unterschreitet oder überschreitet. Der Schwellenwert kann zum Beispiel basierend auf dem Kontrast der Störstrukturen festgelegt werden. Für kontrastarme Messobjekte können solche Korrelationsmaxima mit besonders großem Wert verworfen werden.

Aus der DE 10 2014 113 256 A1 sind eine Bildaufnahmevorrichtung und ein Verfahren zur Bildaufnahme mit Reflexunterdrückung bekannt. Ein Objekt wird unter einer Mehrzahl von Beleuchtungsgeometrien beleuchtet. Ein Detektor erfasst eine Mehrzahl von Bildern des Objekts für die Mehrzahl von Beleuchtungsgeometrien. Eine elektronische Auswerteeinrichtung wendet eine Abschattungsoperation zur Reflexunterdrückung auf wenigstens einen Teil der Mehrzahl von Bildern an. Die Abschattungsoperation zur Reflexunterdrückung hängt von der bei der Aufnahme des jeweiligen Bilds verwendeten Beleuchtungsgeometrie ab. Die durch die Abschattungsoperation erzeugten modifizierten Bilder werden zu einem Ergebnisbild kombiniert.

Aus der DE 10 2017 125 799 A1 ist ein Verfahren zur Reduktion von Bildstörungen in Bildern bekannt. Bilder werden bei unterschiedlichen Anordnungen eines Probenobjekts zu einer Beleuchtung und einem Detektor erfasst. Basierend auf einem Vergleich von Bildpunktwerten von Bildpunkten der Bilder erfolgt dann ein bildpunktweises Kombinieren der Bilder. Dadurch wird eine Störungsreduktion erzielt, d. h. es können Reflexe und/oder Abschattungen reduziert werden.

Aus der US 2002 / 0 090 127 A1 ist ein Verfahren zum Digitalisieren mikroskopischer Bilder von biologischem Gewebe bekannt. Zunächst wird ein Bild in ein Graustufenbild umgewandelt. Dann werden der Mittelwert und die Standardabweichungen der lokalen Pixelintensitäten analysiert. Die mittleren Pixelintensitäten werden verwendet, um zwischen Gewebe enthaltenden Regionen und leeren Regionen und anderen Nichtgeweberegionen des Bilds zu unterschieden. Die Standardabweichungen sind ein guter Hinweis auf die Grenze zwischen Gewebe und leerem Bild. Der Mittelwert und die Standardabweichungen werden kombiniert, um einen Grenzwert zu erzeugen, der verwendet wird, um eine anfängliche Klassifikation von Gewebe gegenüber Nichtgewebe durchzuführen. Nachfolgend können morphologische Filter angewendet werden, um die Klassifikation basierend auf der Größe und der Position von benachbarten Gruppen von potenziellen Gewebepixeln zu verfeinern.

Aus der US 9 068 944 B2 ist es bekannt, den Umfang von Lichtintensitätsdaten bei einem scannenden Molekülzählverfahren zu verkleinern, das unter Verwendung eines konfokalen oder Mehrphotonenmikroskops durchgeführt wird. Der Zeitverlauf einer Lichtintensität von Licht aus einem gegenüber der Probe bewegten Detektionsbereich wird analysiert, um das Signal eines Licht emittierenden Partikels in dem Zeitverlauf zu detektieren. Bereiche, in denen kein Signal vorliegt, das Licht von lichtemittierenden Partikeln anzeigt, werden aus den Lichtintensitätsdaten zu dem Zeitverlauf der Lichtintensität entfernt.

### AUFGABE DER ERFINDUNG

Der Erfindung liegt die Aufgabe zugrunde, ein Verfahren und ein Mikroskop mit einer Einrichtung zum Erfassen von Verlagerungen einer Probe gegenüber einem Objektiv aufzuzeigen, bei denen das Erfassen der Verlagerungen der Probe gegenüber dem Objektiv automatisch, insbesondere ohne manuelle Auswahl von Abbildern von Referenzobjekten der Probe erfolgen kann.

### LÖSUNG

Die Aufgabe der Erfindung wird durch ein Verfahren mit den Merkmalen des unabhängigen Patentanspruchs 1 und durch ein Mikroskop mit den Merkmalen des unabhängigen Patentanspruchs 15 gelöst. Die abhängigen Patentansprüche 2 bis 14 betreffen bevorzugte Ausführungsformen des erfindungsgemäßen Verfahrens. Sie offenbaren zugleich bevorzugte Ausführungsformen des erfindungsgemäßen Mikroskops.

### BESCHREIBUNG DER ERFINDUNG

Bei dem erfindungsgemäßen Verfahren zum Erfassen von Verlagerungen einer Probe gegenüber einem Objektiv wird die Probe mit dem Objektiv auf einen Bildsensor abgebildet. Mit dem Bildsensor werden Bilder der Probe aufgenommen, indem von der Probe kommendes Licht an Bildpunkten des Bildsensors registriert wird. Eine Teilmenge von nicht mehr als 90 % der Bildpunkte des Bildsensors wird ausgewählt. Dazu werden Streuungen von Intensitäten des während eines Einrichtzeitraums von der Probe kommenden und an den einzelnen Bildpunkten des Bildsensors registrierten Lichts bestimmt, und die Streuungen werden als Kriterium beim Auswählen der Teilmenge der Bildpunkte des Bildsensors verwendet. Anschließend werden Teile der Bilder, die jeweils der ausgewählten Teilmenge der Bildpunkte des Bildsensors entsprechen, mit einem Teil mindestens eines Referenzbilds, die ebenfalls der ausgewählten Teilmenge der Bildpunkte des Bildsensors entsprechen, verglichen. Bei den Referenzbildern kann es sich insbesondere um zuvor aufgenommene Bilder der Probe handeln, bei denen sich die Probe in bekannten Relativpositionen gegenüber dem Objektiv befand.

Bis auf das Bestimmen der Streuungen und das Verwenden der Streuungen als Kriterium beim Auswählen der Teilmengen der Bildpunkte des Bildsensors kann das erfindungsgemäße Verfahren dem aus der WO 2020 / 201 430 A1 bekannten Verfahren oder den von F. Balzarotti et al. und K. C. Gwosch et al. beschriebenen Verfahren zur Erfassung von lateralen Verlagerungen einer Probe gegenüber einem Objektiv entsprechen.

Zur Auswahl der Abbilder geeigneter Referenzobjekte der Probe in den aufgenommenen Bildern der Probe werden die Streuungen von Lichtintensitäten des von der Probe kommenden und von dem Bildsensor registrierten Lichts bestimmt, die sich während eines Einrichtzeitraums an den einzelnen Bildpunkten des Bildsensors ergeben. Es wird also der zeitliche Verlauf der Intensität des an den einzelnen Bildpunkten des Bildsensors registrierten Lichts über den Einrichtzeitraum analysiert. Dazu kann die Intensität des Lichts bzw. eines dem jeweiligen Bildpunkt des Bildsensors zugeordneten Signals des Bildsensors mit einer geeigneten Abtastrate abgetastet werden, oder die Intensität oder das Signal des Bildsensors wird über aufeinanderfolgende kurze Intervalle integriert. Die Abtastrate bzw. die Intervalle sind so zu wählen, dass typischerweise zwischen 7 und 100 Einzelwerte als Grundlage für die Bestimmung jeder Streuung an jedem Bildpunkt des Bildsensors bereitstehen.

Konkret kann die Streuung für den jeweiligen Bildpunkt des Bildsensors als Standardabweichung dieser Einzelwerte von dem Mittelwert der Einzelwerte bestimmt werden. Anders gesagt werden die Streuungen dann als Standardabweichung der Intensitäten von einer mittleren Intensität des an dem jeweiligen Bildpunkt des Bildsensors registrierten Lichts bestimmt. Eine Bestimmung der Streuungen als Varianz der Intensitäten des an dem jeweiligen Bildpunkt des Bildsensors registrierten Lichts ist ebenfalls möglich und grundsätzlich gleichwertig, da die Varianzen und die Standardabweichungen in einem festen Verhältnis zueinander stehen. Die Varianzen sind die Quadrate der Standardabweichungen. Unter Berücksichtigung dieser Tatsache sind alle folgenden Ausführungen von den Standardabweichungen auf die Varianzen der Intensitäten übertragbar.

Die derart bestimmten Streuungen der Lichtintensitäten sind zu einem nicht unwesentlichen Teil durch ein Grundrauschen an den Bildpunkten des Bildsensors und statistisch bedingt, insbesondere dann, wenn der Bestimmung der jeweiligen Streuungen nur wenige Photonen des von der Probe kommenden Lichts zugrunde liegen. Es ist daher grundsätzlich sinnvoll, die Streuungen bezüglich eines Streuungsgrundwerts, der von einer Wurzel aus einer mittleren Intensität des an einem jeweiligen Bildpunkt des Bildsensors registrierten Lichts linear abhängig ist, und bezüglich des Grundrauschens zu bereinigen, soweit das Grundrauschen an den Bildpunkten des Bildsensors gegenüber dem Streuungsgrundwert nicht so klein bleibt, dass es vernachlässigt werden kann. Die Bereinigung bezüglich des Grundrauschens kann durch Subtrahieren eines konstanten Grundrauschwerts erfolgen. Die Bereinigung bezüglich des Streuungsgrundwerts kann erfolgen, indem von jeder Streuung der Streuungsgrundwert an dem jeweiligen Bildpunkt subtrahiert wird; alternativ können die Streuungen normiert werden, indem jede Streuung durch den Streuungsgrundwert an dem jeweiligen Bildpunkt dividiert wird.

Die Bildpunkte des Bildsensors mit den höchsten Streuungen, insbesondere den höchsten bereinigten Streuungen, sind bei der Auswahl der Bildpunkte des Bildsensors, die geeigneten Referenzobjekten der Probe für das Erfassen von Verlagerungen in der Probe gegenüber dem Objektiv entsprechen, von besonderer Bedeutung. Dabei hängt es von den Bedingungen während des Einrichtzeitraums ab, ob die Größe der Streuungen als positives oder als negatives Kriterium bei der Auswahl der Bildpunkte der Teilmenge heranzuziehen ist.

Wenn die Probe während des Einrichtzeitraums gegenüber dem Objektiv in Bewegung versetzt wird, sind die resultierenden Streuungen ein sinnvolles positives Kriterium beim Auswählen der Teilmenge der Bildpunkte des Bildsensors. Die Streuungen weisen dann auf Abbilder von Referenzobjekten hin, die sich infolge der Bewegung der Probe gegenüber dem Objekt in leicht erfassbarer Weise verlagern, so dass die Bewegung anhand leicht erfassbarer Änderungen der Bilder leicht verfolgt werden kann. Bildpunkte, an denen trotz der Bewegung der Probe gegenüber dem Objektiv keine nennenswerten Streuungen auftreten, sind hingegen für die Verfolgung dieser Bewegungen ohne Informationsgehalt.

Konkret kann die Probe während eines ersten Teilzeitraums des Einrichtzeitraums in eine erste Bewegung gegenüber dem Objektiv versetzt werden. Dabei aus der ersten Bewegung resultierende erste Streuungen über den ersten Teilzeitraum können bestimmt und anschließend beim Auswählen der Teilmenge der Bildpunkte des Bildsensors als positives Kriterium verwendet werden. Die Umsetzung der Auswahl kann so erfolgen, dass die ersten Streuungen oder die bereinigten ersten Streuungen an allen Bildpunkten der Teilmenge oder zumindest in einem vorgegebenen maximalen ersten Abstand zu allen Bildpunkten der Teilmenge einen ersten Streuungsgrenzwert überschreiten.

Noch konkreter kann eine erste Vorauswahl für die Teilmenge der Bildpunkte getroffen werden, indem alle Bildpunkte ausgewählt werden, an denen die ersten Streuungen oder die bereinigten ersten Streuungen den ersten Streuungsgrenzwert überschreiten, und indem alle Bildpunkte hinzugeführt werden, die in dem vorgegebenen maximalen ersten Abstand zu den Bildpunkten liegen, an denen die ersten Streuungen oder die bereinigten ersten Streuungen den ersten Streuungsgrenzwert überschreiten.

Wenn hier oder im Folgenden davon die Rede ist, dass Bildpunkte in einem vorgegebenen maximalen Abstand zu bestimmten anderen Bildpunkten liegen, so sind damit alle Bildpunkte gemeint, die in keinem größeren Abstand als dem vorgegebenen maximalen Abstand zu den bestimmten anderen Bildpunkten liegen, also nicht weiter als der vorgegebene maximale Abstand von den bestimmten anderen Bildpunkten entfernt sind.

In einer Ausführungsform des erfindungsgemäßen Verfahrens verläuft die erste Bewegung nur in einer zu einer optischen Achse des Objektivs orthogonalen Raumrichtung. Bei einer bevorzugten anderen Ausführungsform des erfindungsgemäßen Verfahrens verläuft die erste Bewegung aber in beiden zu der optischen Achse des Objektivs orthogonalen Raumrichtungen. Ganz konkret kann die Probe gegenüber dem Objektiv bei der ersten Bewegung aus einer zentralen Position nacheinander in acht um diese zentrale Position herum angeordnete weitere Positionen eines insbesondere quadratischen Netzes von Rasterpunkten bewegt werden, wobei an jeder dieser Positionen an jedem der Bildpunkte des Bildsensors die Intensität des von der Probe kommenden Lichts registriert wird. Diese Bewegung kann auch wiederholt werden. So werden dann je Bildpunkt des Bildsensors neun Intensitäten oder ein Vielfaches von neun Intensitäten registriert, und aus diesen Intensitäten wird die zu dem jeweiligen Bildpunkt zugehörige Streuung der Intensitäten bestimmt. Auf diese Weise werden Bildpunkte selektiert, mit denen Abbilder von geeigneten Referenzobjekten für das Erfassen von beliebigen lateralen Bewegungen der Probe gegenüber dem Objektiv registriert werden.

Wenn die erste Bewegung in einer ersten Richtung oder Ebene verläuft, in der die Verlagerungen der Probe gegenüber dem Objektiv erfasst werden, kann die Probe während eines zweiten Teilzeitraums des Einrichtzeitraums in eine zweite Bewegung gegenüber dem Objektiv versetzt werden, die in einer zweiten Richtung verläuft, in der die Verlagerung der Probe gegenüber dem Objektiv erfasst wird und die normal zu der ersten Richtung oder Ebene verläuft. Konkret kann es sich bei der zweiten Richtung um die Richtung der optischen Achse des Objektivs handeln. Wenn dann aus der zweiten Bewegung resultierende zweite Streuungen über den zweiten Teilzeitraum bestimmt und beim Auswählen der Teilmenge der Bildpunkte des Bildsensors als positives Kriterium verwendet werden, werden mit Hilfe dieses positiven Kriteriums Bildpunkte ausgewählt, die Abbildern von Referenzobjekten entsprechen, welche besonders gut für die Verfolgung von axialen Bewegungen der Probe gegenüber dem Objektiv geeignet sind.

Konkret kann die Teilmenge der Bildpunkte des Bildsensors dabei so ausgewählt werden, dass an ihren Bildpunkten oder in einem vorgegebenen maximalen zweiten Abstand zu ihren Bildpunkten die zweiten Streuungen oder die bereinigten zweiten Streuungen einen zweiten Streuungsgrenzwert überschreiten.

Noch konkreter kann eine zweite Vorauswahl für die Teilmenge der Bildpunkte getroffen werden, indem alle Bildpunkte ausgewählt werden, an denen die zweiten Streuungen oder die bereinigten zweiten Streuungen den zweiten Streuungsgrenzwert überschreiten und indem alle Bildpunkte hinzugefügt werden, die in dem vorgegebenen maximalen zweiten Abstand zu den Bildpunkten liegen, an denen die zweiten Streuungen oder die bereinigten zweiten Streuungen den zweiten Streuungsgrenzwert überschreiten. Anschließend kann dann eine vereinigte Vorauswahl für die Teilmenge der Bildpunkte getroffen werden, indem eine Vereinigungsmenge der ersten Vorauswahl und der zweiten Vorauswahl bestimmt wird, also alle Bildpunkte ausgewählt werden, die zumindest in einer der beiden Vorauswahlen enthalten sind.

Es versteht sich, dass grundsätzlich auch drei Vorauswahlen erstellt und vereinigt werden können, indem über drei verschiedene Teilzeiträume die Probe in jeweils nur einer der drei Raumrichtungen gegenüber dem Objektiv bewegt wird und die zugehörigen Streuungen an den einzelnen Bildpunkten bestimmt werden. Umgekehrt kann auch nur eine einzige Vorauswahl für die Teilmenge basierend auf einer einzigen zweidimensionalen lateralen Bewegung der Probe gegenüber dem Objektiv getroffen und davon ausgegangen werden, dass diese Vorauswahl auch für das Verfolgen einer axialen Bewegung der Probe gegenüber dem Objektiv geeignet ist.

Die erfindungsgemäß bestimmten Streuungen können aber auch als sinnvolles negatives Kriterium beim Auswählen der Teilmenge der Bildpunkte des Bildsensors verwendet werden. Insbesondere kann die Probe während eines dritten Teilzeitraums des Einrichtzeitraums gegenüber dem Objektiv nicht bewegt werden. Dann können über den dritten Zeitraum auftretende dritte Streuungen bestimmt und beim Auswählen der Teilmenge der Bildpunkte des Bildsensors als negatives Kriterium verwendet werden. Wenn Streuungen der Intensitäten das an einem der Bildpunkte registrierten Lichts, die signifikant über statistisch bedingte Streuungsgrundwerte hinaus gehen, auch ohne Bewegung der Probe gegenüber dem Objektiv auftreten, kann dies insbesondere zwei Ursachen haben, nämlich zum einen Bewegungen von Strukturen innerhalb der Probe oder allgemeiner von Teilen der Probe einschließlich eines Probenträgers und eines Deckglases und zum anderen gestörte Bildpunkte des Bildsensors. Gestörte Bildpunkte des Bildsensors sollten für das Erfassen von Verlagerungen der Probe gegenüber dem Objektiv ebenso wenig verwendet werden, wie Bildpunkte, die Abbilder von sich innerhalb der Probe bewegenden Strukturen erfassen. Also sind die dritten Streuungen ein nachvollziehbares negatives Kriterium für die Auswahl der Teilmenge der Bildpunkte.

Konkret kann die Teilmenge der Bildpunkte des Bildsensors anhand dieses negativen Kriteriums so ausgewählt, dass an ihren Bildpunkten oder in einem vorgegebenen maximalen dritten Abstand zu ihren Bildpunkten die dritten Streuungen oder die bereinigten dritten Streuungen einen dritten Streuungsgrenzwert nicht überschreiten.

Noch konkreter kann eine dritte Vorauswahl für die Teilmenge der Bildpunkte getroffen werden, indem alle Bildpunkte entfernt werden, an denen die dritten Streuungen oder die bereinigten dritten Streuungen den dritten Streuungsgrenzwert überschreiten, und indem weiterhin alle Bildpunkte entfernt werden, die in dem vorgegebenen maximalen dritten Abstand zu den Bildpunkten liegen, an denen die dritten Streuungen oder die bereinigten dritten Streuungen den dritten Streuungsgrenzwert überschreiten. Diese dritte Vorauswahl kann dann mit der ersten Vorauswahl oder, falls auch eine zweite Vorauswahl getroffen wurde, mit deren Vereinigungsmenge mit der ersten Vorauswahl zusammengeführt werden, indem eine Schnittmenge der dritten Vorauswahl und der ersten Vorauswahl oder der Vereinigungsmenge bestimmt wird.

In einer alternativen Ausführungsform zur Anwendung der dritten Streuungen als negatives Kriterium wird eine Bildpunktwichtungsmaske auf die Bilder und das mindestens eine Referenzbild angewandt, deren Transparenz mit der dritten Streuung oder der bereinigten dritte Streuung an dem jeweiligen Bildpunkt abnimmt. Diese Bildpunktwichtungsmaske kann dann ggf. auf die erste Vorauswahl oder die vereinigte Vorauswahl der Bildpunkte angewandt werden.

Neben Bildpunkten, an denen Streuungen auch ohne Bewegen der Probe gegenüber dem Objektiv auftreten, können auch solche Bildpunkte beim Auswählen der Teilmenge nicht berücksichtigt oder entfernt werden, die einen vierten Abstand zu einem Rand des Bildsensors nicht einhalten. Dieser vierte Abstand hat ebenso wie die voranstehend genannten ersten und zweiten Abstände die Funktion, sicherzustellen, dass die Abbilder geeigneter Referenzobjekte auch dann von der ausgewählten Teilmenge abgedeckt werden, wenn sich die zugehörigen Referenzobjekte mit der Probe gegenüber dem Objektiv bewegen und sich dadurch ihre Abbilder auf dem Bildsensor verlagern. Der voranstehend genannte dritte Abstand hat hingegen die Funktion, zu verhindern, dass die Abbilder von sich innerhalb der Probe bewegenden Strukturen in den Bereich der ausgewählten Teilmenge gelangen. Geeignete Größen der Abstände hängen von den Abbildungsverhältnissen der Probe auf dem Bildsensor ab. Typischerweise liegen die Abstände im Bereich von 10 bis 100 Bildpunkten, oft in einem Bereich von 20 bis 50 Bildpunkten.

Soweit hier und an anderer Stelle Ordnungszahlen wie "erster", "zweiter", "dritter" und "vierter" verwendet werden, so dienen diese Ordnungszahlen ausschließlich der Unterscheidbarkeit der damit versehenen Begriffe. So setzt eine dritte Vorauswahl für die Teilmenge der Bildpunkte nicht voraus, dass es eine erste und/oder zweite Vorauswahl der Teilmenge der Bildpunkte gibt. Vielmehr kann auch nur die dritte Vorauswahl der Bildpunkte getroffen werden. Weiterhin kann die dritte Vorauswahl auch zeitlich vor einer ebenfalls getroffenen ersten und/oder zweiten Vorauswahl getroffen werden. Weiterhin ist es nicht erforderlich, dass sich mit unterschiedlichen Ordnungszahlen versehenen Merkmale unterscheiden. So kann sich der zweite Streuungsgrenzwert von dem ersten Streuungsgrenzwert unterscheiden, er muss es aber nicht.

Zu den Streuungsgrenzwerten ist weiter anzumerken, dass diese sinnvollerweise abhängig von der Gesamtheit der mit ihnen verglichenen Streuungen oder bereinigten Streuungen gewählt werden. So kann der jeweilige Streuungsgrenzwert beispielsweise so gesetzt werden, dass er nur von 10 % oder 5 % oder 1 % der Streuungen oder bereinigten Streuungen an den einzelnen Bildpunkten überschritten wird.

Es wurde schon erläutert, dass die dritten Streuungen, die ohne Bewegung der Probe gegenüber dem Objektiv resultieren, mittels einer Bildpunktwichtungsmaske als negatives Kriterium für die Auswahl der Teilmenge angewandt werden können. Die Auswahl der Teilmenge der Bildpunkte des Bildsensors kann auch insgesamt als Bildmaske umgesetzt werden, die beim Vergleichen der Teile der Bilder mit den Teilen des jeweils einen Referenzbilds auf die Bilder und das mindestens eine Referenzbild angewandt wird. Vor dem Anwenden dieser die Auswahl der Teilmenge in Form von transparenten Bereichen umsetzenden Bildmaske können Kanten zwischen den transparenten Bereichen und nicht transparenten Bereichen der Bildmaske geglättet werden. Dann nimmt der Einfluss von Bildpunkten im Bereich der Kanten kontinuierlich ab. So wird verhindert, dass große Unterschiede zwischen den Bildern und den Referenzbildern dadurch auftreten, dass irgendwelche Abbilder von Objekten in der Probe, die nicht als Referenzobjekte ausgewählt wurden, die Kanten der Bildmaske überqueren.

Die Auswahl der Teilmenge der Bildpunkte durch das erfindungsgemäße Verfahren kann vollständig automatisch erfolgen, d. h. computerimplementiert und ohne jegliche Beteiligung eines menschlichen Anwenders. Die relative Größe der Teilmenge der Bildpunkte, die automatisch ausgewählt wird, hängt dabei von den vorgegebenen Abständen und den Kriterien zur Auswahl der Streuungsgrenzwerte ab. Typischerweise beträgt sie bei allen Ausführungsformen des erfindungsgemäßen Verfahrens nicht mehr als 75 %, oft nicht mehr als 50 % und meistens nicht mehr als 25 % der Bildpunkte des Bildsensors. Eine sinnvolle Auswahl der Teilmenge umfasst bei allen Ausführungsformen des erfindungsgemäßen Verfahrens vielfach mindestens 1 % und oftmals mindestens 5 % und/oder vielfach mindestens zwanzig und oftmals mindestens 200 der Bildpunkte des Bildsensors.

Ein erfindungsgemäßes Mikroskop weist ein Objektiv, einen Probenhalter zum Positionieren einer Probe und eine Einrichtung zum Erfassen von Verlagerungen der Probe gegenüber dem Objektiv auf. Die Einrichtung weist einen ein Array von Bildpunkten umfassenden Bildsensor auf, auf dem die Probe mit dem Objektiv abgebildet wird. Der Bildsensor ist zum Aufnehmen von Bildern der Probe, indem von der Probe kommendes Licht an den Bildpunkten des Bildsensors registriert wird, ausgebildet. Ein Auswahlmodul der Einrichtung ist dazu ausgebildet, eine Teilmenge von nicht mehr als 90 % der Bildpunkte des Bildsensors auszuwählen. Zu diesem Zweck ist das Auswahlmodul dazu ausgebildet, Streuungen von Intensitäten des während eines Einrichtzeitraums von der Probe kommenden und an den einzelnen Bildpunkten des Bildsensors registrierten Lichts zu bestimmen und die Streuungen als Kriterium beim Auswählen der Teilmenge der Bildpunkte des Bildsensors zu verwenden. Ein Vergleichsmodul der Einrichtung ist dazu ausgebildet, die Teile der Bilder, die jeweils der ausgewählten Teilmenge der Bildpunkte des Bildsensors entsprechen, mit Teilen mindestens eines Referenzbilds, die ebenfalls der ausgewählten Teilmenge der Bildpunkte des Bildsensors entsprechen, zu vergleichen. Als Ergebnis dieses Vergleichs erfasste Verlagerungen der Probe gegenüber dem Objektiv können von einem Korrekturmodul verwendet werden, um den Probenhalter zu Ausgleichsbewegungen anzusteuern, die diese Verlagerungen kompensierenden. So wird die Probe effektiv gegenüber dem Objektiv in Ruhe gehalten.

Aus den voranstehenden Erläuterungen von bevorzugten Ausführungsformen des erfindungsgemäßen Verfahrens ergeben sich entsprechende bevorzugte Ausführungsformen des erfindungsgemäßen Mikroskops.

Bei einem zu dem erfindungsgemäßen Verfahren alternativen Verfahren zum Erfassen von Verlagerungen einer Probe gegenüber einem Objektiv wird die Probe mit dem Objektiv auf einen Bildsensor abgebildet, werden Bilder der Probe mit dem Bildsensor aufgenommen, indem von der Probe kommendes Licht an den Bildpunkten des Bildsensors registriert wird, wird eine Teilmenge von nicht mehr als 90 % der Bildpunkte des Bildsensors ausgewählt, indem für einen Einrichtzeitraum, der um mindestens 100 %, vorzugsweise um mindestens 500 %, noch mehr bevorzugt um mindestens 1.000 % länger als eine Belichtungsdauer der Bilder ist und währenddessen die Probe gegenüber dem Objektiv nicht bewegt wird, mittlere Intensitäten des von der Probe kommenden und an den einzelnen Bildpunkten des Bildsensors registrierten Lichts bestimmt werden, indem Streuungen der mittleren Intensitäten über Gruppen von 9 bis 625, vorzugsweise 9 bis 25 an einander benachbarten Bildpunkten bestimmt werden und indem die Streuungen oder wie oben bereinigte Streuung als positives Kriterium beim Auswählen der Teilmenge der Bildpunkte des Bildsensors verwendet werden. Die Teile der Bilder, die der ausgewählten Teilmenge der Bildpunkte des Bildsensors entsprechen, werden dann mit Teilen mindestens eines Referenzbilds, die ebenfalls der ausgewählten Teilmenge der Bildpunkte des Bildsensors entsprechen, verglichen. Konkret können die mittleren Intensitäten über die Gruppen von einander benachbarten Bildpunkten jeweils einem zentralen Bildpunkt der jeweiligen Gruppe zugeordnet und dann wie beim Treffen der ersten Vorauswahl bei dem erfindungsgemäßen Verfahren verwendet werden. Auch alle Ausführungsformen des erfindungsgemäßen Verfahrens, die hierzu passen, sind bevorzugte Ausführungsformen des alternativen Verfahrens, das hier ausdrücklich als weitere Erfindung offenbart, aber aktuell nicht beansprucht wird.

Das alternative Verfahren findet Bereiche der Bilder mit starken räumlichen Streuungen der Intensitäten des von der Probe kommenden Lichts, die nicht durch Bewegungen von Strukturen in der Probe nivelliert werden. Das alternative Verfahren erkennt jedoch nicht, wenn diese starken Streuungen auf optische Artefakte oder Fehler bei Bildpunkten des Bildsensors zurückgehen. Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Bildmaske die Rede ist, ist dies so zu verstehen, dass genau eine Bildmaske, zwei Bildmasken oder mehr Bildmasken vorhanden sind und ggf. hintereinander geschaltet sein können. Die in den Patentansprüchen angeführten Merkmale können durch weitere Merkmale ergänzt werden oder die einzigen Merkmale sein, die das jeweilige Verfahren aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine Prinzipdarstellung eines erfindungsgemäßen Mikroskops.
- **Fig. 2**: ist ein Ablaufdiagramm einer Ausführungsform des erfindungsgemäßen Verfahrens.
- **Fig. 3A-3E**: sind Grafiken zur Erläuterung der Ermittlung einer ersten Vorauswahl bei dem erfindungsgemäßen Verfahren.
- **Fig. 4A-4E**: sind Grafiken zur Ermittlung einer dritten Vorauswahl bei dem erfindungsgemäßen Verfahren.
- **Fig. 5A-5C**: sind Grafiken zur Ausbildung einer Bildmaske bei dem erfindungsgemäßen Verfahren.
- **Fig. 6A-6C**: sind Grafiken zu Details der dritten Vorauswahl bei dem erfindungsgemäßen Verfahren und
- **Fig. 7A-7C**: sind Details zu der ersten Vorauswahl bei dem erfindungsgemäßen Verfahren.

### FIGURENBESCHREIBUNG

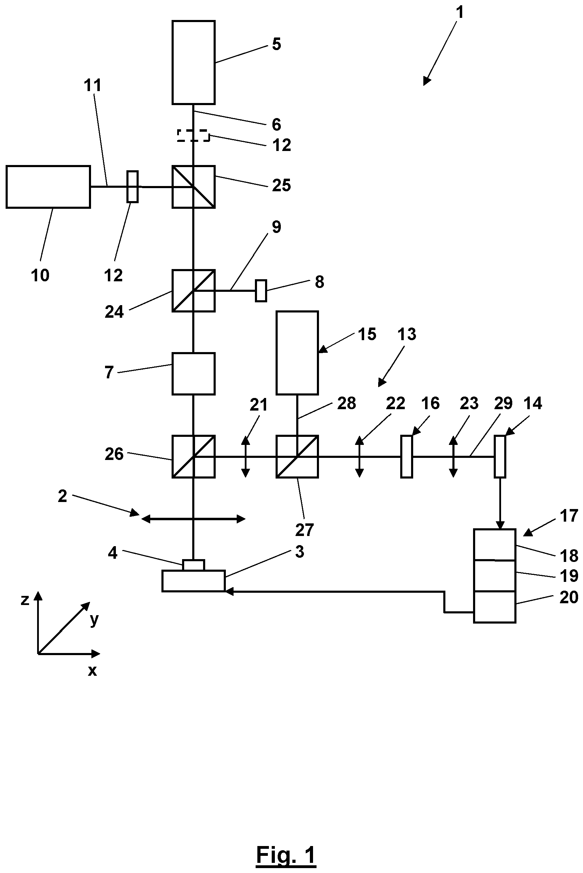

Das in **Fig. 1** dargestellte Mikroskop 1 weist ein Objektiv 2 und einen Probenhalter 3 mit einer hier nicht detaillierter dargestellten Aktuatorik zum Positionieren einer Probe 4 gegenüber dem Objektiv 2 auf. Mit dem Probenhalter 3 ist die Probe 4 lateral, d.h. in x- und y-Richtung und axial in Richtung einer optischen Achse des Objektivs, d.h. in z-Richtung gegenüber dem Objektiv 2 positionierbar. Zum Abbilden interessierender Strukturen einer Probe durch Laser-Scanning-Fluoreszenzlicht-Mikroskopie weist das Mikroskop 1 eine Anregungslichtquelle 5 für Anregungslicht 6, einen Scanner 7 und einen Detektor 8 für Fluoreszenzlicht 9 von der Probe 4 auf. Weiterhin ist eine Depletionslichtquelle 10 für Depletionslicht 11, beispielsweise STED-Licht, vorgesehen, um die räumliche Auflösung der Laser-Scanning-Fluoreszenzlicht-Mikroskopie zu erhöhen. Dabei wird eine Lichtverteilung des Depletionslichts 11 in der Probe 4 mit einem Wellenfrontmodulator 12 so geformt, dass sie ein zentrales Intensitätsminimum aufweist. Statt zur STED-Mikroskopie kann das Mikroskop 1 beispielsweise auch zur MINFLUX-Mikroskopie ausgebildet sein. Dazu kann dann eine Lichtintensitätsverteilung des Anregungslichts 6 mit einem optionalen weiteren Wellenfrontmodulator 12 so geformt werden, dass sie ein zentrales Intensitätsminimum aufweist. Das Mikroskop 1 muss aber überhaupt kein Laser-Scanning-Mikroskop sein, sondern es kann sich beispielsweise auch um ein Lokalisationsmikroskop handeln. In jedem Fall ist eine Einrichtung 13 zum Erfassen von Verlagerungen der Probe 4 gegenüber dem Objektiv 2 vorhanden. Die Einrichtung 13 umfasst einen ein Array von Bildpunkten aufweisenden Bildsensor 14. Der Bildsensor 14 ist zum Aufnehmen von Bildern der Probe, indem von der Probe kommendes Licht 29 an den Bildpunkten des Bildsensors 14 registriert wird, ausgebildet. Dieses Licht 29 wird mit Hilfe einer Beleuchtungslichtquelle 15 für Beleuchtungslicht 28 hervorgerufen, mit dem die Probe 4 hier im Auflicht beleuchtet wird. Bei der Abbildung der Probe 4 auf den Bildsensor 14 ist in einer Fourier-Ebene zur Bildebene eine Blende 16 angeordnet, die einen Zentralbereich der Fourier-Ebene und entsprechende niedrige Ortsfrequenzen aus den mit dem Bildsensor 14 aufgenommenen Bildern ausblendet. Die mit dem Bildsensor 14 aufgenommenen Bilder werden in einer Verarbeitungseinheit 17 der Einrichtung 13 verarbeitet. Die Verarbeitungseinheit 17 umfasst ein Auswahlmodul 18 für die Auswahl einer Teilmenge von Bildpunkten des Bildsensors, die dann in einem Vergleichsmodul 19 einem Vergleich der Bilder mit Referenzbildern zugrunde gelegt wird. Aufgrund dieses Vergleichs erfasste Verlagerungen der Probe 4 gegenüber dem Objektiv 2 werden von einem Korrekturmodul 20 durch Ansteuerung des Probenhalters 3 kompensiert. Die Einrichtung 13 kann vollständig derjenigen entsprechen, die aus der WO 2020/201430 A1 bekannt ist. Auch das Abbildungssystem für die Abbildung der Probe 4 auf dem Bildsensor 14 kann von dort übernommen werden. Daher wird hier die Lage von Linsen 21-23 im Strahlengang zwischen dem Objektiv 2 und dem Bildsensor 14 nicht näher erläutert. Die Anordnung von Strahlteilern 24-27 zum Trennen bzw. Zusammenführen der einzelnen Lichtpfade in Fig. 1 ist selbsterklärend.

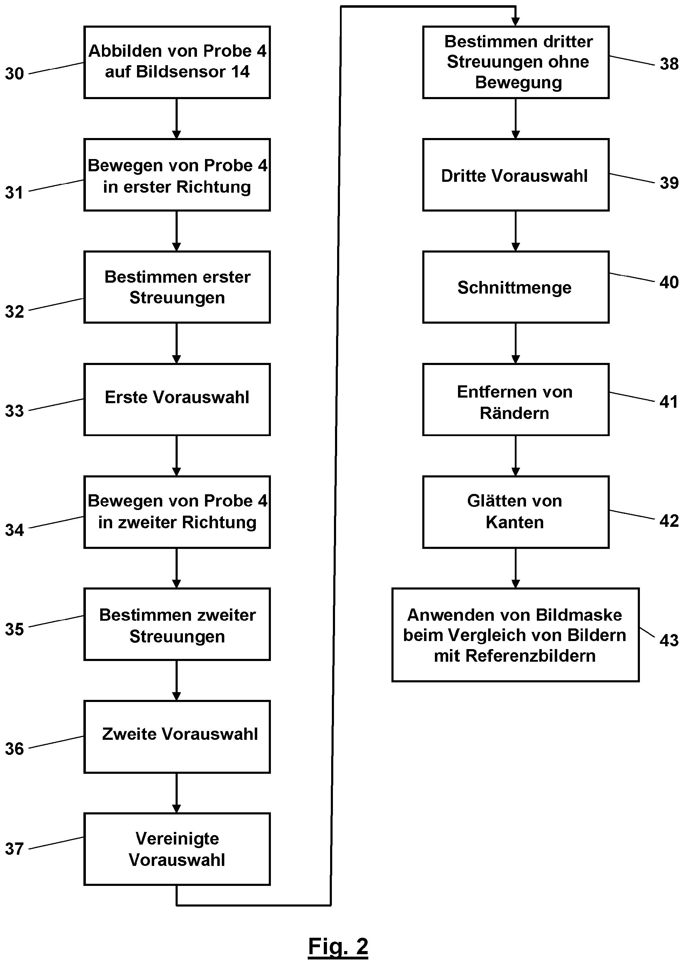

In **Fig. 2** ist eine Ausführungsform des erfindungsgemäßen Verfahrens in Form eines Ablaufdiagramms illustriert. Ein erster Schritt 30, das Abbilden der Probe 4 auf den Bildsensor 14, wird mit dem optischen Aufbau des Mikroskops 1 gemäß Fig. 1 realisiert. Die folgenden Schritte 31-42 werden von dem Auswahlmodul 18 ausgeführt. In dem Schritt 31 wird in einem ersten Teilzeitraum eines Einrichtzeitraums die Probe 4 in einer ersten Richtung gegenüber dem Objektiv 2 bewegt. Dabei an den einzelnen Bildpunkten auftretende erste Streuungen der Intensität des von der Probe 4 kommenden Lichts 29 werden in dem Schritt 32 bestimmt. Unter Verwendung der ersten Streuungen oder von um rein statistische Einflüsse bereinigten ersten Streuungen als positives Kriterium wird in dem Schritt 33 eine erste Vorauswahl für die Teilmenge der von dem Vergleichsmodul 19 zu berücksichtigenden Bildpunkte getroffen. Dann erfolgt in dem Schritt 34 das Bewegen der Probe in einer zweiten Richtung. Hierzu werden in dem Schritt 35 zweite Streuungen der Lichtintensitäten des Lichts 29 von der Probe an den einzelnen Bildpunkten des Bildsensors 14 bestimmt. Unter Verwendung der zweiten Streuungen oder von um rein statistische Einflüsse bereinigten zweiten Streuungen als positives Kriterium wird in dem Schritt 36 eine zweite Vorauswahl für die Teilmenge der Bildpunkte getroffen. In dem Schritt 37 werden die erste Vorauswahl aus dem Schritt 33 und die zweite Vorauswahl aus dem Schritt 36 zu einer vereinigten Vorauswahl zusammengefügt, indem eine Vereinigungsmenge bestimmt wird. In dem Schritt 38 erfolgt in einem dritten Teilzeitraum des Einrichtzeitraums ohne Bewegungen der Probe 4 gegenüber dem Objektiv 2 das Bestimmen dritter Streuungen. Auf Basis dieser dritten Streuungen oder auf Basis von um statistische Einflüsse bereinigten dritten Streuungen als negatives Kriterium wird in dem Schritt 39 eine dritte Vorauswahl für die Teilmenge getroffen. In dem Schritt 40 wird dann eine Schnittmenge zwischen der vereinigten Vorauswahl aus dem Schritt 37 und der dritten Vorauswahl aus dem Schritt 39 bestimmt. Von dieser Schnittmenge werden in dem Schritt 41 die Bildpunkte an den Rändern des Bildsensors 14 entfernt. Anschließend erfolgt in dem Schritt 42 ein Glätten von Kanten zwischen den Bereichen ausgewählter und nicht ausgewählter Bildpunkte. Eine hieraus resultierende Bildmaske, bei der die Bereiche ausgewählter Bildpunkte transparent und die Bereiche nicht ausgewählter Bildpunkte nicht transparent sind, wird in einem Schritt 43 von dem Vergleichsmodul 19 beim Vergleich der Bilder mit den Referenzbildern angewandt. Dieser Vergleich kann insbesondere auf Basis der Bestimmung von Relationen zwischen jeweils einem Bild und einem Referenzbild erfolgen. Diesbezügliche Details können der WO 2020/201430 A1 entnommen werden.

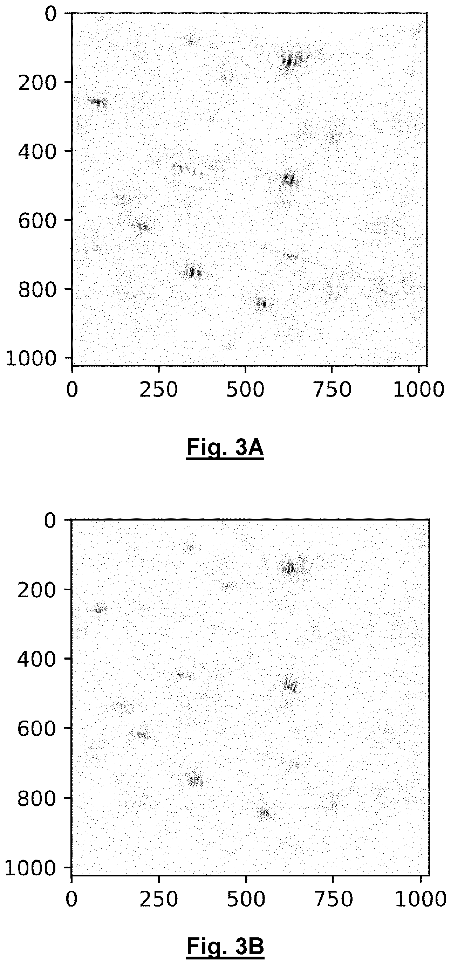

**Fig. 3A** ist eine Graustufendarstellung der Mittelwerte der Intensitäten eines mit dem Bildsensor 14 gemäß Fig. 1 aufgenommenen Bilds über den ersten Teilzeitraum des Einrichtzeitraums, in dem die Probe 4 gegenüber dem Objektiv 2 bewegt wird. Insbesondere kann diese Bewegung so erfolgen, dass die Probe in der orthogonal zu der optischen Achse des Objektivs 2 verlaufenden x-/y-Ebene nacheinander in eine von 3 x 3 benachbarten Positionen gegenüber dem Objektiv 2 gebracht wird. In jeder dieser Positionen wird die Intensität des Lichts 29 von der Probe 4 registriert. Fig. 3A zeigt die Mittelwerte der entsprechenden neun Intensitätswerte.

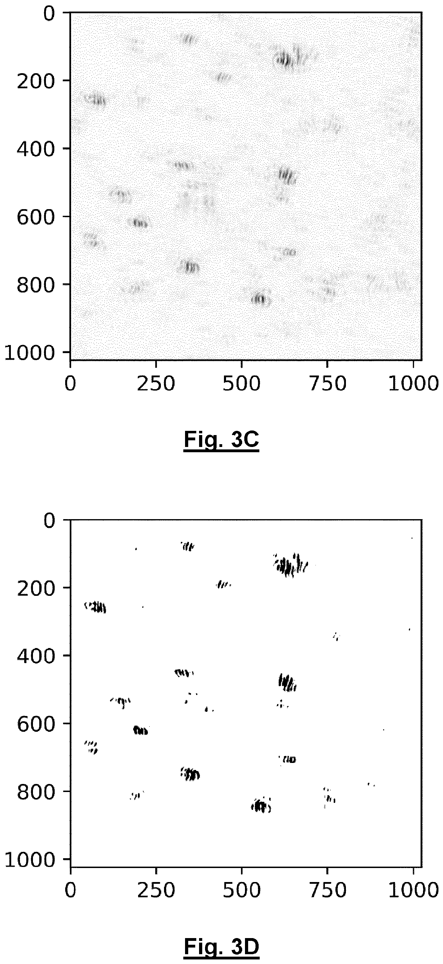

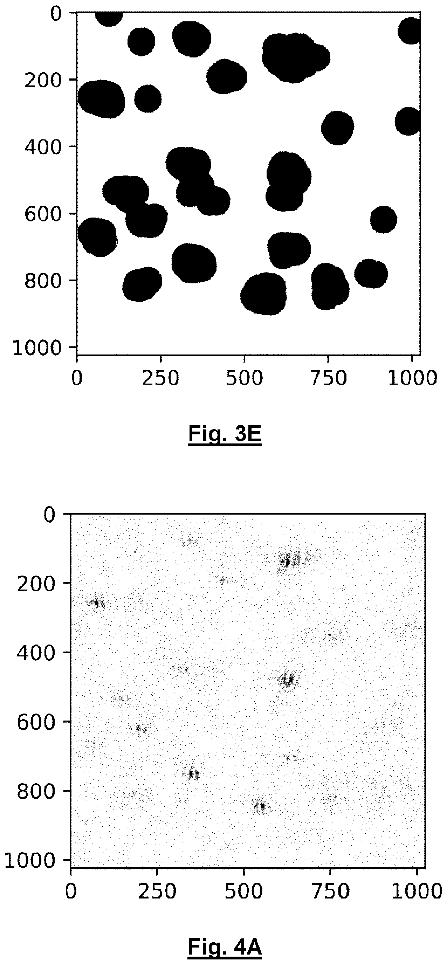

**Fig. 3B** ist demgegenüber eine Graustufendarstellung der Standardabweichungen der Intensitäten an den einzelnen Bildpunkten des Bildsensors 14. **Fig. 3C** ist eine Graustufendarstellung der Standardabweichungen gemäß Fig. 3B nach deren Normalisierung, wie sie noch näher erläutert werden wird. **Fig. 3D** ist das Ergebnis eines Vergleichs der Verteilung der normalisierten Standardabweichungen gemäß Fig. 3C mit einem Streuungsgrenzwert, dessen Festlegung ebenfalls noch erläutert werden wird. **Fig. 3E** zeigt das Ergebnis, wenn zu jedem der Bildpunkte oberhalb des Streuungsgrenzwerts gemäß Fig. 3D alle Punkte in einem vorgegebenen maximalen Abstand hinzugenommen werden, so dass sich die Abbilder von Referenzobjekten in der Probe 4, die den Bildpunkten oberhalb des Streuungsgrenzwerts gemäß Fig. 3D entsprechen, auch bei Relativbewegung der Probe 4 gegenüber dem Objektiv 2 in einem der Bereiche gemäß Fig. 3E auf den Bildsensor 14 wiederfinden.

Während Fig. 3A-3E das Bestimmen der ersten Vorauswahl gemäß den Schritten 31-33 gemäß Fig. 2 näher erläutert, erläutert Fig. 4A-4E das Bestimmen der dritten Vorauswahl gemäß den Schritten 38 und 39 in Fig. 2. Dabei erfolgt kein Bewegen der Probe 4 gegenüber dem Objektiv 2. An den Bildpunkten des Bildsensors 4 resultierende Streuungen der Intensität des Lichts 29 von der Probe 4 gehen so vollständig auf statistische Effekte, Bewegungen von Strukturen innerhalb der Probe und fehlerhafte Bildpunkte des Bildsensors 14 zurück.

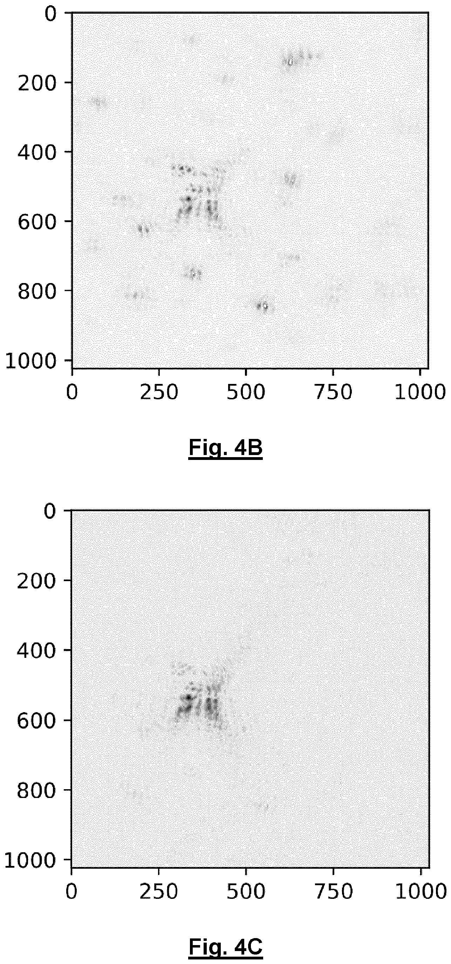

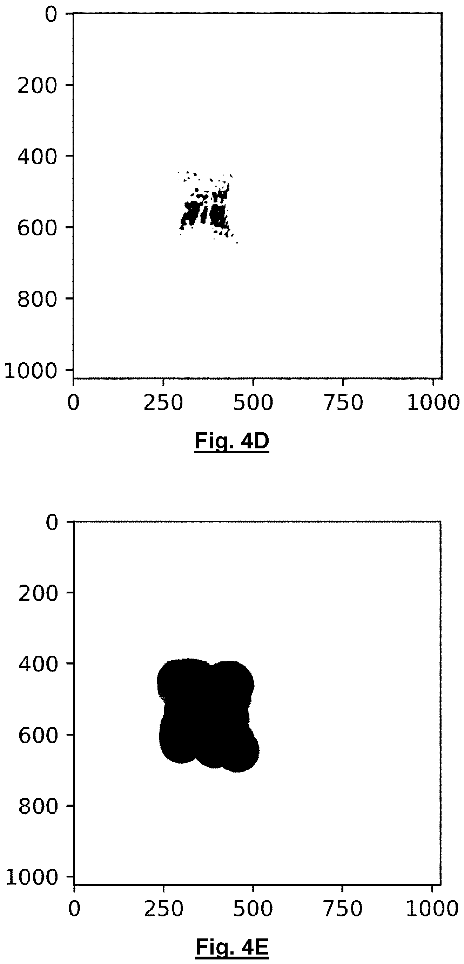

Die Verteilung der mittleren Intensitäten gemäß **Fig.4A** unterscheidet sich nicht merklich von derjenigen der mittleren Intensitäten gemäß Fig. 3A. Hingegen ist die Verteilung der Standardabweichungen der Streuungen gemäß **Fig. 4B** sehr unterschiedlich zu derjenigen gemäß Fig. 3B. Noch größer ist der Unterschied bei der Verteilung der normalisierten Standardabweichungen gemäß **Fig. 4C** zu derjenigen gemäß Fig. 3C sowie das Ergebnis des Vergleichs der normalisierten Standardabweichungen mit einem dritten Streuungsgrenzwert gemäß **Fig. 4D** zu dem Ergebnis des Vergleichs gemäß Fig. 3D. In **Fig. 4E** ist die dritte Vorauswahl so dargestellt, dass hier die ausgewählten Bildpunkte hell sind, während die nicht ausgewählten oder deselektierten Bildpunkte schwarz sind. Die Darstellung ist damit anders als diejenige der ersten Vorauswahl in Fig. 3E.

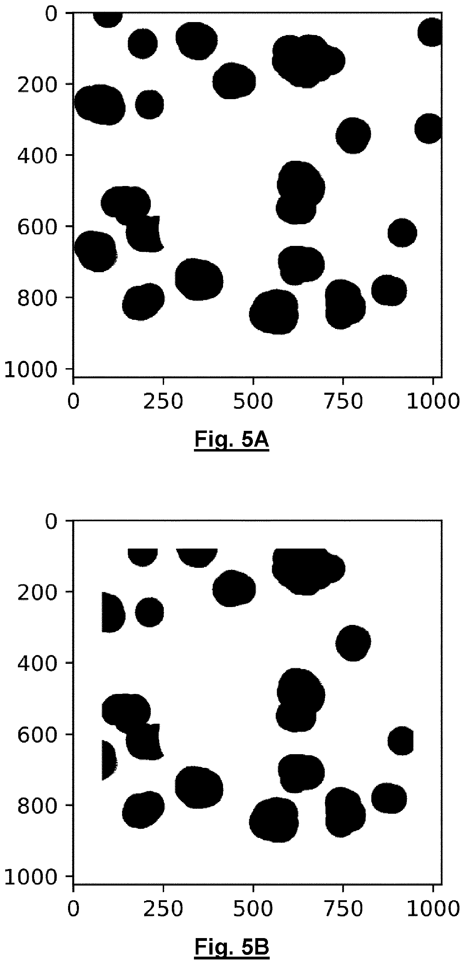

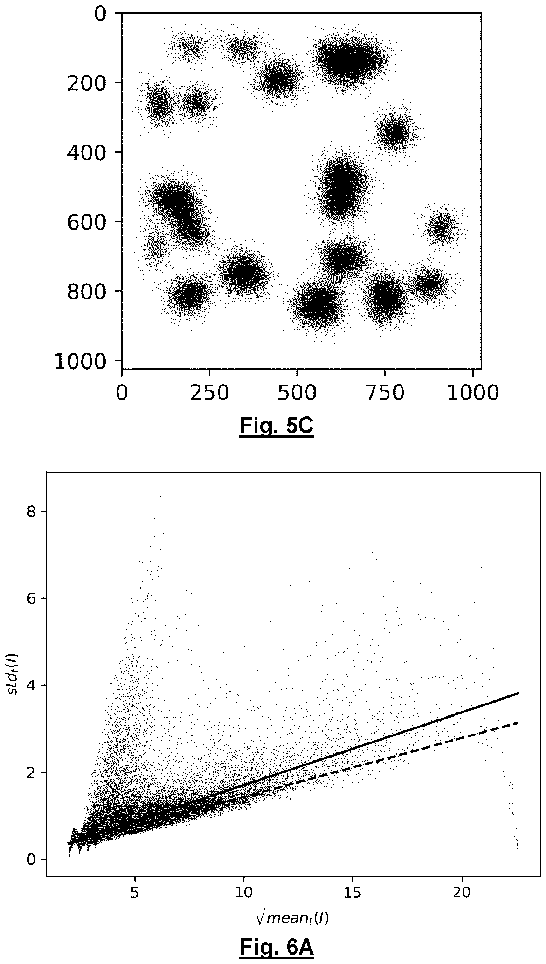

Bei der Schnittmenge der ersten und der dritten Vorauswahl gemäß **Fig. 5A** fehlen daher gegenüber der ersten Vorauswahl gemäß Fig. 3E die in Fig. 4E schwarz markierten Bereiche. Gemäß **Fig. 5B** sind zusätzlich Bildpunkte an den Rändern des Bildsensors 4 entfernt, wie dies in dem Schritt 41 von Fig. 2 erfolgt. Gemäß **Fig. 5C** sind die Kanten der Fig. 5B entsprechenden Teilmenge der Bildpunkte geglättet, wie dies in Schritt 42 von Fig. 2 erfolgt. Eine Fig. 5C entsprechende Bildmaske kann dann im Schritt 43 von Fig. 2 beim Vergleich der Bilder mit den Referenzbildern zum Erfassen von Verlagerungen der Probe 4 gegenüber dem Objektiv 2 verwendet werden.

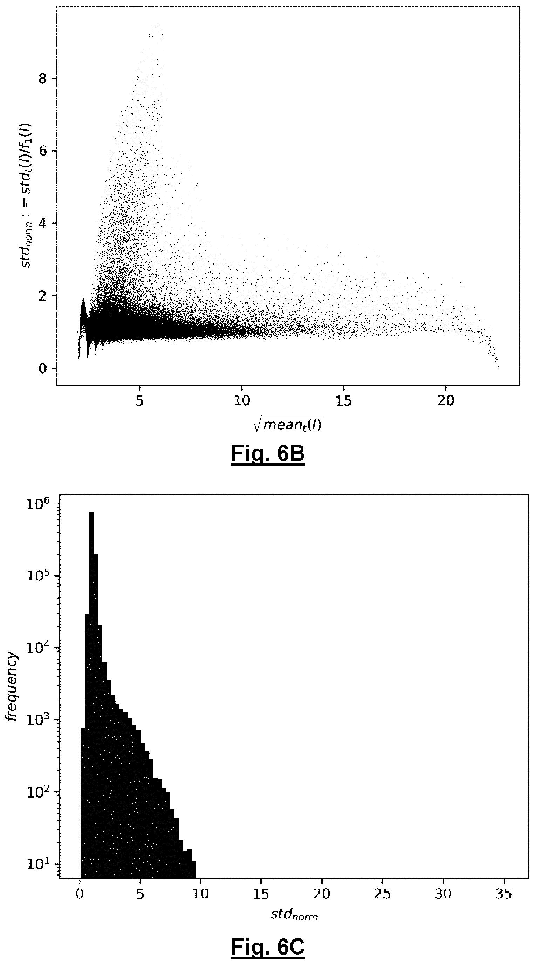

Fig. 6A ist eine Auftragung der Standardabweichungen der Intensitäten des Lichts 29 von der Probe 4 über den dritten Teilzeitraum ohne Bewegung der Probe, die in dem Schritt 38 von Fig. 2 bestimmt wurden, über dem jeweiligen Mittelwert der Intensitäten über den dritten Teilzeitraum. Anders gesagt ist für jeden in Fig. 4A in einer Graustufe dargestellten Mittelwert der Intensitäten bzw. die Wurzel daraus die zugehörige Standardabweichung gemäß der Graustufe in Fig. 4B aufgetragen. Mit durchgezogener Linie zeigt Fig. 6A das Ergebnis einer linearen Regression über alle aufgetragenen Wertepaare. Mit gestrichelter Linie ist das Ergebnis einer weiteren linearen Regression für alle Wertepaare unterhalb der durchgezogenen Linie dargestellt. Die gestrichelte Linie gibt damit einen von der Wurzel aus der mittleren Intensität abhängigen Streuungsgrundwert an. **Fig. 6B** zeigt die Wertepaare gemäß Fig. 6A nach Normierung der jeweiligen Standardabweichung auf den Streuungsgrundwert. Diese normierten Standardabweichungen sind als Graustufen in Fig. 4C dargestellt. **Fig. 6C** ist ein Histogramm der normierten Standardabweichungen. Hier ist die Häufigkeit der Standardabweichungen in verschiedenen Größenklassen der normierten Standardabweichungen algorithmisch aufgetragen. Durch Bestimmung beispielsweise einer 99 %-Perzentilen kann der Streuungsgrenzwert für die Ermittlung der signifikanten normierten Streuungen abhängig von der jeweiligen Probe bestimmt werden. Den in Fig. 4D angezeigten signifikanten normierten Streuungen liegt jedoch ein nach üblichen statistischen Signifikanzkriterien auf 3 festgelegter Streuungsgrenzwert zugrunde.

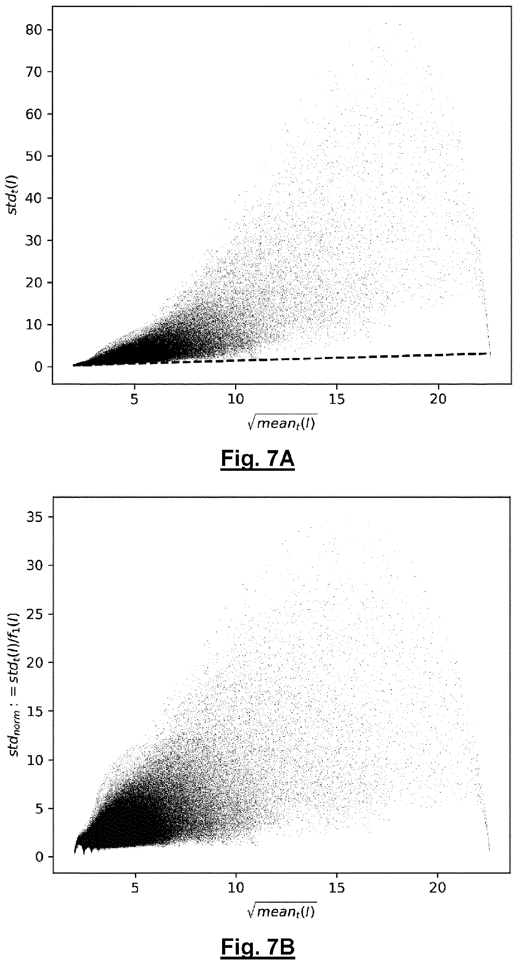

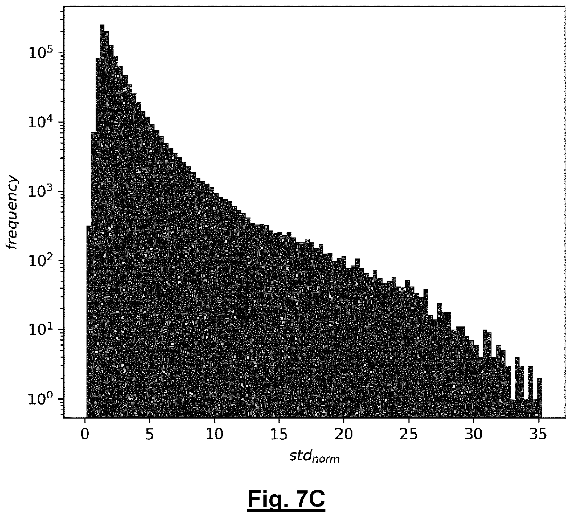

Fig. 7A-7C zeigt die zu Fig. 6A-6C entsprechenden Darstellungen der während des ersten Teilzeitraums des Einrichtzeitraums bestimmten ersten Streuungen. Aus **Fig. 7A** wird jedoch kein neuer von der Wurzel aus der mittleren Intensität abhängiger Streuungsgrundwert bestimmt, sondern es wird derjenige gemäß Fig. 6A verwendet, das heißt die gestrichelte Linie in Fig. 7A ist dieselbe wie in Fig. 6A. Dass die gestrichelte Linie in Fig. 7A weniger zu steigen scheint, liegt daran, dass die Standardabweichungen der in dem Schritt 33 von Fig. 2 bestimmten Intensitäten auch relativ deutlich größer sind als diejenigen der in dem Schritt 38 von Fig. 2 bestimmten Intensitäten. **Fig. 7B** zeigt die Wertepaare gemäß Fig. 7A nach Normierung der jeweiligen Standardabweichung auf den Streuungsgrundwert gemäß Fig. 6A. Diese normierten Standardabweichungen sind als Graustufen in Fig. 5C dargestellt. **Fig. 7C** ist ein Fig. 6C entsprechendes Histogramm der normierten Standardabweichungen. Erneut kann durch Bestimmung beispielsweise einer 99 %-Perzentilen der Streuungsgrenzwert für die Ermittlung der signifikanten normierten Streuungen abhängig von der jeweiligen Probe bestimmt werden. Den in Fig. 5D angezeigten signifikanten normierten Streuungen liegt jedoch ein auf 10 festgelegter Streuungsgrenzwert zugrunde. Dieser höhere Streuungsgrenzwert trägt der Tatsache Rechnung, dass die Standardabweichungen der in dem Schritt 33 von Fig. 2 beim Bewegen der Probe bestimmten Intensitäten auch nach Ihrer Normierung deutlich größer sind als diejenigen der in dem Schritt 38 von Fig. 2 bei nicht bewegter Probe bestimmten Intensitäten.

Wenn in einer Probe 4 spezielle Referenzobjekte, wie beispielsweise Gold-Nanorods, enthalten sind, deren Abbilder besonders gut zum Erfassen von Bewegungen der Probe 4 gegenüber dem Objektiv 2 geeignet sind, wählt das erfindungsgemäße Verfahren die zu den Abbildern dieser künstlichen Referenzobjekte zugehörigen Bildpunkte automatisch aus. Strukturen der Probe werden in diesem Fall nur selten und nur dann ausgewählt, wenn sie ähnlich gut wie die speziellen Referenzobjekte als Referenzobjekte geeignet sind. Wenn jedoch keine speziellen Referenzobjekte in die Probe eingebracht sind, wählt das erfindungsgemäße Verfahren - zumindest bei Verwendung der Perzentilen gemäß Fig. 7C - die am besten als Referenzobjekte geeigneten Strukturen der Probe aus. Das Ganze geschieht völlig automatisch. Wenn jedoch die normierten Standardabweichungen oberhalb der 99 %-Perzentilen gemäß Fig. 7C wegen des Fehlens von speziellen Referenzobjekte und von als Ersatz geeigneten Strukturen in der jeweiligen Probe absolut gesehen nur klein sind und nicht über die normierten Standardabweichungen oberhalb der 99 %-Perzentilen gemäß Fig. 6C deutlich hinausgehen, kann das erfindungsgemäße Verfahren - unabhängig von einer sonstigen Verwendung der Perzentilen gemäß Fig. 7C - einen Warnhinweis dahingehend ausgeben, dass die jeweilige Probe für das Erfassen ihrer Verlagerung gegenüber dem Objektiv nicht gut geeignet ist.

### BEZUGSZEICHENLISTE

- 1: Mikroskop
- 2: Objektiv
- 3: Probenhalter
- 4: Probe
- 5: Anregungslichtquelle
- 6: Anregungslicht
- 7: Scanner
- 8: Detektor
- 9: Fluoreszenzlicht
- 10: Depletionslichtquelle
- 11: Depeltionslicht
- 12: Strahlformungseinrichtung
- 13: Einrichtung
- 14: Bildsensor
- 15: Beleuchtungslichtquelle
- 16: Blende
- 17: Auswerteeinheit
- 18: Auswahlmodul
- 19: Vergleichsmodul
- 20: Korrekturmodul
- 21: Linse
- 22: Linse
- 23: Linse
- 24: Strahlteiler
- 25: Strahlteiler
- 26: Strahlteiler
- 27: Strahlteiler
- 28: Beleuchtungslicht
- 29: Licht von der Probe 4
- 30-43: Schritt des erfindungsgemäßen Verfahrens

## Patentansprüche

1. Verfahren zum Erfassen von Verlagerungen einer Probe (4) gegenüber einem Objektiv (2),
- wobei die Probe (4) mit dem Objektiv (2) auf einen Bildsensor abgebildet wird,
- wobei Bilder der Probe (4) mit dem Bildsensor (14) aufgenommen werden, indem von der Probe (4) kommendes Licht (29) an Bildpunkten des Bildsensors (14) registriert wird,
- wobei eine Teilmenge von nicht mehr als 90 % der Bildpunkte des Bildsensors (14) ausgewählt wird und
- wobei die Teile der Bilder, die jeweils der Teilmenge der Bildpunkte des Bildsensors (14) entsprechen, mit Teilen mindestens eines Referenzbilds, die ebenfalls der Teilmenge der Bildpunkte des Bildsensors (14) entsprechen, verglichen werden,
**dadurch gekennzeichnet,**
- **dass** Streuungen von Intensitäten des während eines Einrichtzeitraums von der Probe (4) kommenden und an den einzelnen Bildpunkten des Bildsensors (14) registrierten Lichts (29) bestimmt werden, indem ein zeitlicher Verlauf der Intensität des am jeweiligen Bildpunkt des Bildsensors (14) registrierten Lichts (29) über den Einrichtzeitraum analysiert wird, und
- **dass** die Streuungen als Kriterium beim Auswählen der Teilmenge der Bildpunkte des Bildsensors (14) verwendet werden.

2. Verfahren nach Anspruch 1, **dadurch gekennzeichnet, dass** die Streuungen als Standardabweichungen der Intensität von einer mittleren Intensität des an dem jeweiligen Bildpunkt des Bildsensors (14) registrierten Lichts (29) bestimmt werden.

3. Verfahren nach einem der vorhergehenden Ansprüche, **dadurch gekennzeichnet, dass** die Probe (4) während eines ersten Teilzeitraums des Einrichtzeitraums in eine erste Bewegung gegenüber dem Objektiv (2) versetzt wird und dass aus der ersten Bewegung resultierende erste Streuungen über den ersten Teilzeitraum bestimmt und beim Auswählen der Teilmenge der Bildpunkte des Bildsensors (14) als positives Kriterium verwendet werden.

4. Verfahren nach Anspruch 3, **dadurch gekennzeichnet, dass** die Teilmenge der Bildpunkte des Bildsensors (14) so ausgewählt wird, dass an ihren Bildpunkten oder in einem vorgegebenen maximalen ersten Abstand zu ihren Bildpunkten die ersten Streuungen einen ersten Streuungsgrenzwert überschreiten, wobei eine erste Vorauswahl für die Teilmenge der Bildpunkte getroffen wird, indem alle Bildpunkte ausgewählt werden, an denen die ersten Streuungen den ersten Streuungsgrenzwert überschreiten und indem alle Bildpunkte hinzugefügt werden, die in dem vorgegebenen maximalen ersten Abstand zu den Bildpunkten liegen, an denen die ersten Streuungen den ersten Streuungsgrenzwert überschreiten.

5. Verfahren nach Anspruch 3 oder 4, **dadurch gekennzeichnet, dass** die erste Bewegung in einer ersten Richtung oder Ebene verläuft, in der die Verlagerungen der Probe (4) gegenüber dem Objektiv (2) erfasst werden, und dass die Probe (4) während eines zweiten Teilzeitraums des Einrichtzeitraums in eine zweite Bewegung gegenüber dem Objektiv (2) versetzt wird, die in einer zweiten Richtung verläuft, in der die Verlagerungen der Probe (4) gegenüber dem Objektiv (2) erfasst werden und die normal zu der ersten Richtung oder Ebene verläuft, und dass aus der zweiten Bewegung resultierende zweite Streuungen über den zweiten Teilzeitraum bestimmt und beim Auswählen der Teilmenge der Bildpunkte des Bildsensors (14) als positives Kriterium verwendet werden.

6. Verfahren nach Anspruch 5, **dadurch gekennzeichnet, dass** die Teilmenge der Bildpunkte des Bildsensors (14) so ausgewählt wird, dass an ihren Bildpunkten oder in einem vorgegebenen maximalen zweiten Abstand zu ihren Bildpunkten die zweiten Streuungen einen zweiten Streuungsgrenzwert überschreiten, wobei eine zweite Vorauswahl für die Teilmenge der Bildpunkte getroffen wird, indem alle Bildpunkte ausgewählt werden, an denen die zweiten Streuungen den zweiten Streuungsgrenzwert überschreiten, und indem alle Bildpunkte hinzugefügt werden, die in dem vorgegebenen maximalen zweiten Abstand zu den Bildpunkten liegen, an denen die zweiten Streuungen den zweiten Streuungsgrenzwert überschreiten.

7. Verfahren nach Anspruch 6, soweit rückbezogen auf Anspruch 4, **dadurch gekennzeichnet, dass** eine vereinigte Vorauswahl für die Teilmenge der Bildpunkte getroffen wird, indem eine Vereinigungsmenge der ersten Vorauswahl und der zweiten Vorauswahl bestimmt wird.

8. Verfahren nach einem der vorhergehenden Ansprüche, **dadurch gekennzeichnet, dass** die Probe (4) während eines dritten Teilzeitraums des Einrichtzeitraums gegenüber dem Objektiv (2) nicht bewegt wird und dass über den dritten Teilzeitraum auftretende dritte Streuungen bestimmt und beim Auswählen der Teilmenge der Bildpunkte des Bildsensors (14) als negatives Kriterium verwendet werden, wobei die Teilmenge vorzugsweise nicht mehr als 75 % oder 50 % oder 25 % der Bildpunkte des Bildsensors (14) umfasst.

9. Verfahren nach Anspruch 8, **dadurch gekennzeichnet, dass** die Teilmenge der Bildpunkte des Bildsensors (14) so ausgewählt wird, dass an ihren Bildpunkten oder in einem vorgegebenen maximalen dritten Abstand zu ihren Bildpunkten die dritten Streuungen einen dritten Streuungsgrenzwert nicht überschreiten, wobei vorzugsweise eine dritte Vorauswahl für die Teilmenge der Bildpunkte getroffen wird, indem alle Bildpunkte entfernt werden, an denen die dritten Streuungen den dritten Streuungsgrenzwert überschreiten, und indem weiterhin alle Bildpunkte entfernt werden, die in dem vorgegebenen maximalen dritten Abstand zu den Bildpunkten liegen, an denen die dritten Streuungen den dritten Streuungsgrenzwert überschreiten.

10. Verfahren nach Anspruch 9, soweit rückbezogen auf Anspruch 4 oder auf Anspruch 7, **dadurch gekennzeichnet, dass** beim Auswählen der Teilmenge der Bildpunkte des Bildsensors (14) eine Schnittmenge der dritten Vorauswahl und der ersten oder der vereinigten Vorauswahl bestimmt wird.

11. Verfahren nach Anspruch 8, **dadurch gekennzeichnet, dass** die dritten Streuungen beim Auswählen der Teilmenge der Bildpunkte des Bildsensors (14) als negatives Kriterium verwendet werden, indem eine Bildpunktwichtungsmaske auf die Bilder und das mindestens eine Referenzbild angewandt wird, deren Transparenz mit der dritten Streuung an dem jeweiligen Bildpunkt abnimmt.

12. Verfahren nach einem der vorhergehenden Ansprüche, **dadurch gekennzeichnet, dass** die Streuungen bezüglich eines Grundrauschens an den Bildpunkten des Bildsensors (14) und/oder bezüglich eines statistisch bedingten und von einer Wurzel aus einer mittleren Intensität des an dem jeweiligen Bildpunkt des Bildsensors (14) registrierten Lichts (29) linear abhängigen Streuungsgrundwerts bereinigt werden,
- indem von jeder Streuung ein konstanter Grundrauschwert subtrahiert wird und/oder
- indem
- von jeder Streuung der Streuungsgrundwert an dem jeweiligen Bildpunkt subtrahiert wird oder
- jede Streuung durch den Streuungsgrundwert an dem jeweiligen Bildpunkt dividiert wird.

13. Verfahren nach einem der vorhergehenden Ansprüche, **dadurch gekennzeichnet, dass** beim Auswählen der Teilmenge Bildpunkte, die einen vierten Abstand zu einem Rand des Bildsensors (14) nicht einhalten, nicht berücksichtigt oder entfernt werden, wobei die Teilmenge vorzugsweise nicht mehr als 75 % oder 50 % oder 25 % der Bildpunkte des Bildsensors (14) umfasst.

14. Verfahren nach einem der vorhergehenden Ansprüche, **dadurch gekennzeichnet, dass** beim Vergleichen der Teile der Bilder mit den Teilen des mindestens einen Referenzbilds eine Bildmaske auf die Bilder und das mindestens eine Referenzbild angewandt wird, die die Auswahl der Teilmenge der Bildpunkte des Bildsensors (14) durch transparente Bereiche umsetzt, wobei vorzugsweise Kanten zwischen den transparenten Bereichen und nicht transparenten Bereichen der Bildmaske vor dem Anwenden der Bildmaske geglättet werden.

15. Mikroskop mit
- einem Objektiv (2),
- einem Probenhalter (3) zum Positionieren einer Probe (4) und
- einer Einrichtung (13) zum Erfassen von Verlagerungen der Probe (4) gegenüber dem Objektiv (2),
- wobei die Einrichtung (13) einen ein Array von Bildpunkten umfassenden Bildsensor (14) aufweist, auf den die Probe (4) mit dem Objektiv (2) abgebildet wird,
- wobei der Bildsensor (14) zum Aufnehmen von Bilder der Probe (4) ausgebildet ist, indem von der Probe (4) kommendes Licht (29) an den Bildpunkten des Bildsensors (14) registriert wird,
- wobei ein Auswahlmodul (18) der Einrichtung (13) dazu ausgebildet ist, eine Teilmenge von nicht mehr als 90 % der Bildpunkte des Bildsensors (14) auszuwählen, und
- wobei ein Vergleichsmodul (19) der Einrichtung (13) dazu ausgebildet ist, die Teile der Bilder, die jeweils der Teilmenge der Bildpunkte des Bildsensors (14) entsprechen, mit Teilen mindestens eines Referenzbilds, die ebenfalls der Teilmenge der Bildpunkte des Bildsensors (14) entsprechen, zu vergleichen,
**dadurch gekennzeichnet, dass** das Auswahlmodul (18) dazu ausgebildet ist,
- Streuungen von Intensitäten des während eines Einrichtzeitraum von der Probe (4) kommenden und an den einzelnen Bildpunkten des Bildsensors (14) registrierten Lichts (29) zu bestimmen, indem ein zeitlicher Verlauf der Intensität des am jeweiligen Bildpunkt des Bildsensors (14) registrierten Lichts (29) über den Einrichtzeitraum analysiert wird, und
- die Streuungen als Kriterium beim Auswählen der Teilmenge der Bildpunkte des Bildsensors (14) zu verwenden.

## Claims

1. Method of detecting movements of a sample (4) with respect to an objective (2),
- wherein the sample (4) is imaged onto an image sensor (14) by means of the objective (2),
- wherein images of the sample (4) are recorded by the image sensor (14) in that light (29) coming from the sample (4) is registered at image points of the image sensor (14),
- wherein a subset of not more than 90 % of the image points of the image sensor (14) is selected, and
- wherein parts of the images that each correspond to the subset of the image point of the image sensor (14) are compared to parts of at least one reference image that also correspond to the subset of the image points of the image sensor (14),
**characterized in**
- **that** variations of intensities of the light (29) coming from the sample (4) and registered at the individual image points of the image sensor (14) during a set-up period are determined in that a temporal course of the intensity of the light (29) registered at the respective image point of the image sensor (14) over the set-up period is analyzed, and
- **that** the variations are used as a criterion in selecting the subset of the image points of the image sensor (14).

2. Method of claim 1, **characterized in that** the variations are determined as standard deviations of the intensity from an average intensity of the light (29) registered at the respective image point of the image sensor (14).

3. Method of any of the preceding claims, **characterized in that** the sample, during a first partial period of the set-up period, is set in a first motion with respect to the objective (2), and that first variations over the first partial period resulting from the first motion are determined and used as a positive criterion in selecting the subset of the image points of the image sensor (14).

4. Method of claim 3, **characterized in that** the subset of the image points of the image sensor (14) is selected such that the first variations exceed a first variation limit value at the image points of the subset or at a predetermined maximum first distance to the image points of the first subset, wherein a first pre-selection for the subset of the image points is made **in that** all image points are selected at which the first variations exceed the first variation limit value, and **in that** all image points are added which are located at the predetermined maximum first distance to the image points at which the first variations exceed the first variation limit value.

5. Method of claim 3 or 4, **characterized in that** the first motion runs in a first direction or plane in which the movements of the sample (4) with respect to the objective (2) are detected, and that the sample (4), during a second partial period of the set-up period is set in a second motion with respect to the objective (2), that runs in a second direction in which the movements of the sample (4) with respect to the objective (2) are detected and which is normal to the first direction or plane, and that second variations resulting from the second motion over the second partial period are determined and used as a positive criterion in selecting the subset of the image points of the image sensor (14).

6. Method of claim 5, **characterized in that** the subset of the image points of the image sensor (14) is selected such that the second variations exceed a second variation limit value at the image points of the subset or at a predetermined maximum second distance to the image points of the subset, wherein a second pre-selection for the subset of the image points is made in that all image points are selected at which the second variations exceed the second variation limit value, and **in that** all image points are added which are located within the predetermined maximum second distance to the image points at which the second variations exceed the second variation limit value.

7. Method of claim 6 insofar as dependent on claim 4, **characterized in that** a unified pre-selection for the subset of the image points is made **in that** a set union of the first pre-selection and the second pre-selection is determined.

8. Method of any of the preceding claims, **characterized in that** the sample (4), during a third partial period of the set-up period, is not moved with respect to the objective (2), and that third variations occurring over the third partial period are determined and used as a negative criterion in selecting the subset of the image points of the image sensor (14), wherein the subset does preferably not include more than 75 % or 50 % or 25 % of the image points of the image sensor (14).

9. Method of claim 8, **characterized in that** the subset of the image points of the image sensor (14) is selected such that the third variations do not exceed a third variation limit value at the image points of the subset or within a predetermined maximum third distance to the image points of the subset, wherein a third pre-selection for the subset of the image points is preferably made **in that** all image points are removed at which the third variations exceed the third variation limit value and **in that** further all image points are removed which are within a predetermined maximum distance to the image points at which the third variations exceed the third variation limit value.

10. Method of claim 9 insofar as dependent on claim 4 or claim 7, **characterized in that** in selecting the subset of the image points of the image sensor (14), a cut-set of the third pre-selection and the first or the unified pre-selection is determined.

11. Method of claim 8, **characterized in that** the third variations are used as a negative criterion in selecting the subset of the image points of the image sensor **in that** an image point weighting mask is applied to the images and the at least one reference image, whose transparency decreases with increasing third variation at the respective image point or the third variations within a predetermined maximum third distance to the respective image points.

12. Method of any of the preceding claims, **characterized in that** the variations are adjusted with regard to a background noise at the image points of the image sensor (14) and/or with regard to a statistically caused variation background depending on a square root of an average intensity of the light (29) registered at the respective image point of the image sensor (14),
- **in that** from each variation a constant background noise value is subtracted and/or
- **in that**
- the variation background value at the respective image point is subtracted from each variation or
- each variation is divided by the variation background value at the respective image point.

13. Method of any of the preceding claims, **characterized in that**, in selecting the subset, image points which do not keep a fourth distance to a margin of the image sensor (14) are not considered or removed, wherein the subset does preferably not include more than 75 % or 50 % or 25 % of the image points of the image sensor (14).

14. Method of any of the preceding claims, **characterized in that**, in comparing the parts of the images with the parts of the at least one reference image, an image mask is applied to the images and the at least one reference image, that implements the selection of the subset of the image points of the image sensor (14) by transparent regions, wherein edges between the transparent regions and non-transparent regions of the image mask are preferably smoothened prior to applying the image mask.

15. Microscope comprising
- an objective (2),
- a sample holder (3) for positioning a sample (4), and
- a device (13) for detecting movements of the sample (4) with respect to the objective (2),
- wherein the device (13) comprises an image sensor (13) including an array of image points, onto which the sample (4) is imaged by means of the objective (2),
- wherein the image sensor (14) is configured for recording images of the sample (4) in that light (29) coming from the sample (4) is registered at the image points of the image sensor (14),
- wherein a selection module (18) of the device (13) is configured to select a subset of not more than 90 % of the image points of the image sensor (14), and
- wherein a comparison module (19) of the device (13) is configured to compare parts of the images which each correspond to the subset of the image points of the image sensor (14) with parts of at least one reference image which also correspond to the subset of the image points of the image sensor (14),
**characterized in that** the selection module (18) is configured
- to determine variations of intensities of light coming from the sample (4) and registered at the individual image points of the image sensor (14) during a set-up period **in that** a temporal course of the intensity of the light (29) registered at the respective image point of the image sensor (14) over the set-up period is analyzed, and
- to use the variations as a criterion in selecting the subset of the image points of the image sensor (14).

## Revendications

1. Procédé de détection des déplacements d'un échantillon (4) par rapport à un objectif (2),
- dans lequel l'échantillon (4) est représenté avec l'objectif (2) sur un capteur d'image,
- dans lequel des images de l'échantillon (4) sont prises avec le capteur d'image (14), en enregistrant la lumière (29) provenant de l'échantillon (4) au niveau de points d'image du capteur d'image (14),
- dans lequel une quantité partielle non supérieure à 90 % des points d'image du capteur d'image (14) est sélectionnée et
- dans lequel les parties de l'image, qui correspondent chacune à la quantité partielle des points d'image du capteur d'image (14), sont comparées à des parties d'au moins une image de référence qui correspondent également à la quantité partielle des points d'image du capteur d'image (14),
**caractérisé en ce que**
- les dispersions d'intensités de la lumière (29) provenant de l'échantillon (4) et enregistrées au niveau des points d'image du capteur d'image (14) pendant une période de configuration, en analysant un déroulement chronologique de l'intensité de la lumière (29) enregistrée au niveau du point d'image correspondant du capteur d'image (14) sur la période de configuration et
- les diffusions sont utilisées comme critères lors de la sélection de la quantité de points d'image du capteur d'image (14).

2. Procédé selon la revendication 1, **caractérisé en ce que** les diffusions sont déterminées comme des écarts standard de l'intensité par rapport à une intensité moyenne de la lumière (29) enregistrée au niveau du point d'image du capteur d'image (14).

3. Procédé selon l'une des revendications précédentes, **caractérisé en ce que** l'échantillon (4) est déplacé pendant une première période partielle de la période de configuration avec un premier mouvement par rapport à l'objectif (2) et **en ce que** les premières diffusions résultant du premier mouvement sont déterminées sur la première période partielle et sont utilisées en tant que critère positif lors de la sélection de la quantité partielle des points d'image du capteur d'image (14).

4. Procédé selon la revendication 3, **caractérisé en ce que** la quantité partielle des points d'image du capteur d'image (14) est sélectionnée de façon à ce que, au niveau de leurs points d'image ou à une première distance maximale prédéterminée de ses points d'image, les premières diffusions dépassent une première valeur limite de diffusion, dans lequel une première présélection est effectuée pour la quantité partielle des points d'image, en sélectionnant tous les points d'image au niveau desquels les premières diffusions dépassent la première valeur limite de diffusion et tous les points d'image qui se trouvent à la première distance maximale prédéterminée et au niveau desquels les premières diffusions dépassent la première valeur limite de diffusion, sont ajoutés.

5. Procédé selon la revendication 3 ou 4, **caractérisé en ce que** le premier déplacement s'étend dans une première direction ou un premier plan, dans lequel les déplacements de l'échantillon (4) par rapport à l'objectif (2) sont mesurés, et **en ce que** l'échantillon (4) est transformé, pendant une deuxième période partielle de la période de configuration, en un deuxième déplacement par rapport à l'objectif (2), qui s'étend dans une deuxième direction dans laquelle les déplacements de l'échantillon (4) par rapport à l'objectif (2) sont détectés et qui s'étend perpendiculairement par rapport à la première direction ou au premier plan, et **en ce que** les deuxièmes diffusions résultant du deuxième déplacement sont déterminées sur la deuxième période partielle et sont utilisées en tant que critère positif lors de la sélection de la quantité partielle des points d'image du capteur d'image (14).

6. Procédé selon la revendication 5, **caractérisé en ce que** la quantité partielle des points d'image du capteur d'image (14) est sélectionnée de façon à ce que, au niveau de leurs points d'image ou à une deuxième distance maximale prédéterminée par rapport à ses points d'image, les deuxièmes diffusions dépassent une deuxième valeur seuil de diffusion, dans lequel une deuxième présélection pour la quantité partielle des points d'image est effectuée, grâce au fait que tous les points d'image au niveau desquels les deuxièmes diffusions dépassent la deuxième valeur limite de diffusion sont sélectionnés et grâce au fait que tous les points d'image qui se trouvent à une deuxième distance maximale prédéterminée par rapport aux points d'image, au niveau desquels les deuxièmes diffusions dépassent la deuxième valeur limite de diffusion, sont ajoutés

7. Procédé selon la revendication 6, en référence à la revendication 4, **caractérisé en ce qu'**une présélection unifiée pour la quantité partielle de points d'image est effectuée, grâce au fait qu'une quantité d'unification de la première présélection et de la deuxième présélection est déterminée.

8. Procédé selon l'une des revendications précédentes, **caractérisé en ce que** l'échantillon (4) n'est pas déplacé pendant une troisième période partielle de la période de configuration par rapport à l'objectif (2) et **en ce que** les troisièmes diffusions survenant pendant la troisième période partielle sont déterminées et sont utilisées, lors de la sélection de la quantité partielle des points d'image du capteur d'image (14), en tant que critère négatif, dans lequel la quantité partielle ne comprend de préférence pas plus de 75 % ou 50 % ou 25 % des points d'image du capteur d'image (14).

9. Procédé selon la revendication 8, **caractérisé en ce que** la quantité partielle des points d'image du capteur d'image (14) est sélectionnée de façon à ce que, au niveau de ses points d'image ou dans une troisième distance maximale prédéterminée par rapport à leurs points d'image, les troisièmes diffusions ne dépassent pas une troisième valeur limite de diffusion, dans lequel, de préférence, une troisième présélection est effectuée pour la quantité partielle des points d'image, grâce au fait que tous les points d'image au niveau desquels les troisièmes diffusions dépassent la troisième valeur limite de diffusion, sont éliminés et grâce au fait, en outre, que tous les points d'image qui se trouvent à la troisième distance maximale prédéterminée par rapport aux points d'image, au niveau desquels les troisièmes diffusions dépassent la troisième valeur limite de diffusion, sont éliminés.

10. Procédé selon la revendication 9, en référence à la revendication 4 ou la revendication 7, **caractérisé en ce que**, lors de la sélection de la quantité partielle des points d'image du capteur d'image (14), une intersection de la troisième présélection et de la première présélection ou de la présélection unifiée est déterminée.

11. Procédé selon la revendication 8, **caractérisé en ce que** les troisièmes diffusions sont utilisées, lors de la sélection de la quantité partielle des points d'image du capteur d'image (14), en tant que critère négatif, grâce au fait qu'un masque de pondération de points d'image est appliqué aux images et à l'au moins une image de référence, dont la transparence diminue avec la troisième diffusion au niveau du point d'image correspondant.

12. Procédé selon l'une des revendications précédentes, **caractérisé en ce que** les diffusions sont nettoyées en ce qui concerne un bruit de fond au niveau des points d'image du capteur d'image (14) et/ou en ce qui concerne une valeur de base de diffusion conditionnée statistiquement et dépendant linéairement d'une intensité moyenne de la lumière (29) enregistrée au niveau du point d'image correspondant du capteur d'image (14),
- en soustrayant une valeur de bruit de base constante de chaque diffusion et/ou
- en
- soustrayant de chaque diffusion la valeur de base de diffusion au niveau du point d'image correspondant ou
- divisant chaque diffusion par la valeur de base de diffusion au niveau du point d'image correspondant.

13. Procédé selon l'une des revendications précédentes, **caractérisé en ce que**, lors de la sélection de la quantité partielle, les points d'image qui ne respectent par une quatrième distance par rapport à un bord du capteur d'image (14) ne sont pas pris en compte ou sont éliminés, dans lequel la quantité partielle ne comprend, de préférence, pas plus de 75 % ou 50 % ou 25 % des points d'image du capteur d'image (14).

14. Procédé selon l'une des revendications précédentes, **caractérisé en ce que**, lors de la comparaison des parties des images avec les parties de l'au moins une image de référence, un masque d'image est appliqué aux images et à l'au moins une image de référence, qui convertit la sélection de la quantité partielle des points d'image du capteur d'image (14) à l'aide de zones transparentes, dans lequel, de préférence, les arêtes entre les zones transparentes et les zones non transparentes sont lissées avant l'application du masque d'image.

15. Microscope avec
- un objectif (2),
- un support d'échantillon (3) pour le positionnement d'un échantillon (4) et
- un dispositif (13) pour la détection des déplacements de l'échantillon (4) par rapport à l'objectif (2),
- dans lequel le dispositif (13) comprend une matrice de capteur d'image (14) comprenant des points d'image, sur laquelle l'échantillon (4) est représenté avec l'objectif (2),
- dans lequel le capteur d'image (14) est conçu pour l'enregistrement d'images de l'échantillon (4), grâce au fait que la lumière (29) provenant de l'échantillon (4) est enregistrée au niveau des points d'image du capteur d'image (14),
- dans lequel un module de sélection (18) du dispositif (13) est conçu pour sélectionner une quantité partielle non supérieure à 90 % des points d'image du capteur d'image (14) et
- dans lequel un module de comparaison (19) du dispositif (13) est conçu pour comparer les parties des images qui correspondent à la quantité partielle des points d'image du capteur d'image (14), avec les parties d'au moins une image de référence, qui correspondent également à la quantité partielle du capteur d'image (14),
**caractérisé en ce que** le module de sélection (18) est conçu pour
- déterminer les diffusions d'intensités de la lumière (29) provenant de l'échantillon (4) pendant une période de configuration et enregistrée au niveau des différentes points d'image du capteur d'image (14), grâce au fait qu'un tracé temporel de l'intensité de la lumière (29) enregistrée au niveau du point d'image correspondant du capteur d'image (14) est analysé sur la période de configuration et
- utiliser les diffusions en tant que critère lors de la sélection de la quantité partielle des points d'image du capteur d'image (14).
